# EUROPEAN PATENT SPECIFICATION

(11) **EP 2 983 073 B1**
(45) Date of publication and mention of the grant of the patent: **12.09.2018**
(21) Application number: 15175113.8
(22) Date of filing: 02.07.2015
(51) Int. Cl.: G06F 17/24, G06F 3/0484, G06F 3/0486, G06F 3/048

(54) **MOBILE TERMINAL AND METHOD OF CONTROLLING THE SAME**
MOBILES ENDGERÄT UND VERFAHREN ZUR STEUERUNG DAVON
TERMINAL MOBILE ET SON PROCÉDÉ DE COMMANDE

(30) Priority: 09.07.2014 KR 20140086209
(43) Date of publication of application: 10.02.2016
(73) Proprietor: LG Electronics Inc., Yeongdeungpo-gu Seoul 150-721 (KR)
(72) Inventor: Joo, Songyi, 137-893 Seoul (KR)
(74) Representative: Cabinet Plasseraud

(56) References cited:
- EP-A1- 2 148 497
- EP-A1- 2 549 717
- EP-A2- 2 731 003
- US-A1- 2012 174 009
- US-A1- 2013 263 002
- US-A1- 2013 311 922
- US-A1- 2014 115 455
- US-A1- 2014 155 111

## Description

### BACKGROUND OF THE INVENTION

### Field of the Invention

The present invention relates to a mobile terminal and corresponding method for sensing a touch when a display unit is deactivated.

### Background of the Invention

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

However, the user interface for operating the mobile terminal is complex and requires the display unit be turned on, which uses more battery power. EP2549717 discloses a mobile terminal configured to provide a memo function via a single user action, such as a touch applied to a touch screen of the terminal.

### SUMMARY OF THE INVENTION

Therefore, an aspect of the detailed description is to provide a mobile terminal which can receive a user input by using a deactivated display unit.

Another aspect of the detailed description is to provide a mobile terminal which performs a specific function in response to a user input received through a deactivated display unit.

Another aspect of the detailed description is to provide a mobile terminal which provides a memo function in response to a touch input received through a deactivated display unit.

To achieve these and other advantages and in accordance with the purpose of this specification, the present invention provides a mobile terminal according to claim 1.

In an example useful for understanding the present invention there is provided a mobile terminal including a display unit; a touch pen mounted on the body; a sensing unit configured to sense the touch pen being detached from the body; and a controller configured to, when the touch pen is detached from the body, execute a memo function which processes, as an input of memo information, a touch which is applied from the touch pen to the display unit which is deactivated, wherein the controller maintains the memo function while a state where the touch pen is detached from the body is being maintained.

In another aspect, the present invention provides a method according to claim 9.

Further scope of applicability of the present application will become more apparent from the detailed description given hereinafter. The invention will be carried out according to the appended independent claims.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1A is a block diagram illustrating a mobile terminal according to an embodiment of the present invention;
FIGS. 1B and 1C are conceptual diagrams when an example of a mobile terminal according to an embodiment of the present invention is seen in different directions;
FIG. 2 is a flowchart illustrating a control method according to an embodiment of the present invention;
FIGS. 3(a) to 3(d) are conceptual diagrams illustrating the control method illustrated in FIG. 2;
FIGS. 4A(a) to 4A(d) and 4B(a) to 4B(d) are conceptual diagrams illustrating a method of differently processing memo information according to a first touch;
FIGS. 5A(a) and 5A(d) and 5B(a) to 5B(d) are conceptual diagrams illustrating a method of processing, as one memo information, an image corresponding to a trajectory of a second touch which is applied while a first touch is being maintained when a display unit is deactivated;
FIGS. 6A(a) and 6A(b) and 6B(a) and 6B(b) are conceptual diagrams illustrating a method of differently processing an image generated by a second touch when a display unit is deactivated, based on a first touch;
FIGS. 7A(a) to 7A(c), 7B(a) to 7B(c) and 7C(a) to 7C(d) are conceptual diagrams illustrating a method of deleting an image generated by a second touch while a first touch is being maintained when a display unit is deactivated;
FIGS. 8A(a) to 8A(d) and 8B(a) and 8B(b) are conceptual diagrams illustrating a method of checking input memo information when a display unit is deactivated;
FIGS. 9A(a) to 9A(c), 9B(a) to 9B(c), 9C(a) to 9C(d) and 9D(a) to 9D(d) are conceptual diagrams illustrating a method of performing a memo function by using a touch pen for a deactivated display unit; and
FIG. 10(a) to 10(c) are conceptual diagrams illustrating a method of performing a memo function by using a deactivated display unit in a state a cover is equipped in a mobile terminal.

### DETAILED DESCRIPTION OF THE INVENTION

Description will now be given in detail according to embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc. However, the present invention may be also applicable to a fixed terminal such as a digital TV, a desktop computer and a digital signage, except for specific configurations for mobility.

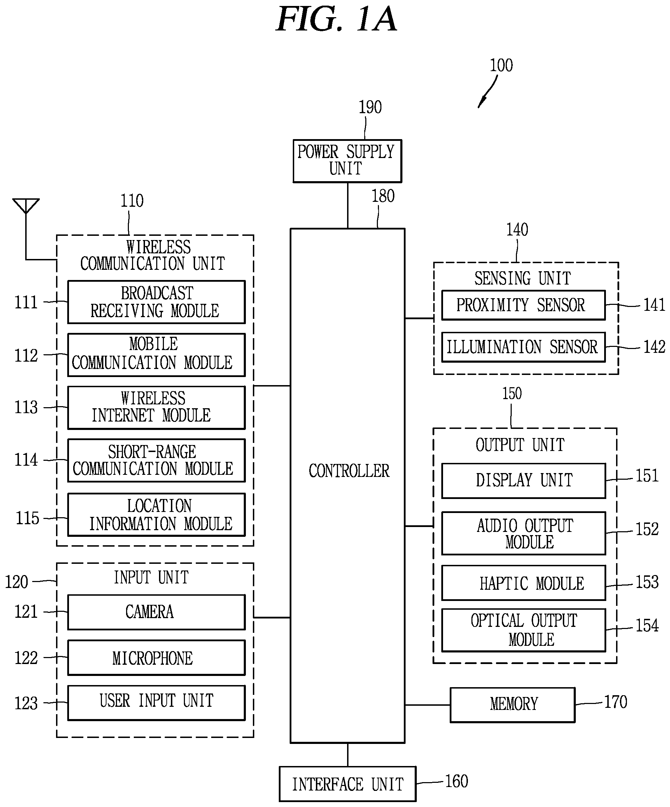

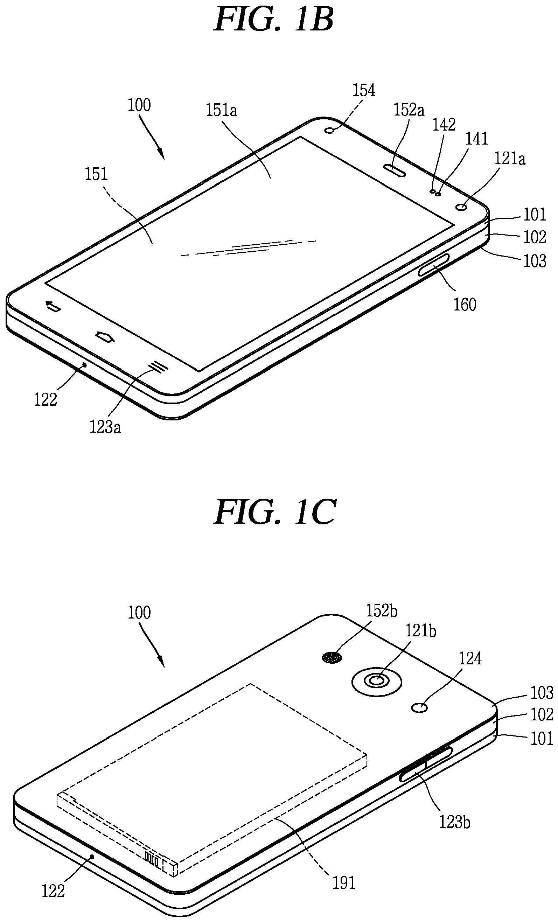

Reference is now made to FIGS. 1A-1C, where FIG. 1A is a block diagram of a mobile terminal according to an embodiment of the present invention, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components of FIG. 1A is not a requirement, and greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the components may operate in cooperation with one another in order to implement an operation, control or control method of the mobile terminal according to various embodiments to be described below. The operation, control or control method of the mobile terminal may be implemented on the mobile terminal by the execution of at least one application program stored in the memory 170.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA 2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

Examples of wireless signals transmitted and/or received via the mobile communication module 112 include audio call signals, video (telephony) call signals, or various formats of data to support communication of text and multimedia messages. The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to the mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114.

Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail. An illumination sensor 142 may also be provided.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The display unit 151, the first audio output module 152a, the second audio output module 152b, the proximity sensor 141, the illumination sensor 142, the optical output module 154, a first camera 121a, a second camera 121b, the first manipulation unit 123a, the second manipulation unit 123b, the microphone 122, the interface 160, etc. may be provided at the mobile terminal 100.

As shown in FIGS. 1B and 1C, the display unit 151, the first audio output module 152a, the proximity sensor 141, the illumination sensor 142, the optical output module 154, the first camera 121a and the first manipulation unit 123a are arranged on a front surface of the terminal body. The second manipulation unit 123b, the microphone 122 and the interface 160 are arranged on side surfaces of the terminal body. And the second audio output module 152b and the second camera 121b are arranged on a rear surface of the terminal body.

However, alternative arrangements are possible and within the teachings of the instant invention. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two mobile terminals, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver, and the second audio output module 152b may be implemented in the form of a loud speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

In the mobile terminal 100 according to an embodiment of the present invention including at least one or more of the above-described elements, the display unit 151 can sense a user input which is received in an inactive state. Also, the mobile terminal 100 according to an embodiment of the present invention may control a function of the mobile terminal 100, based on the sensed user input. The function of the mobile terminal 100 may be performed while the display unit 151 is maintaining an inactive state.

Here, the mobile terminal 100 according to an embodiment of the present invention can supply power to a sensing unit 140 and a touch sensor included in the display unit 151, for receiving a user input when the display unit 151 is deactivated. In more detail, the power supply 190 can supply power to at least one of the sensing unit 140 and the touch sensor, for sensing a user input applied to the display unit 151 which is deactivated. The power may be a minimum power for sensing a user input so as to minimize consumption of the battery.

Moreover, when the display unit 151 is deactivated may denote when the display unit 151 is turned off while the mobile terminal 100 is in a turn-on state. Also, as described above, in the present specification, a state in which minimum power is supplied to the sensing unit 140 and the touch sensor for receiving a user input when the display unit 151 is turned off is referred to as "when the display unit 151 is deactivated" or "the deactivated display unit 151".

The mobile terminal 100 can sense a user input which is received when the display unit 151 is deactivated. The user input may include various schemes. The user input may include a touch input applied to the display unit 151 which is deactivated. Examples of the touch may include various types of touches such as a short (tap) touch, a long touch, a multi touch, a drag touch, a flick touch, a pinch-in touch, a pinch-output touch, a swipe touch, a hovering touch, etc. Also, the user input may include various types of touches which are applied by using a touch pen.

A function of the mobile terminal 100, which is performed when the display unit 151 is deactivated, may include various functions. For example, the function may include a volume adjusting function, a brightness adjusting function, a music reproduction-related function, a memo function, etc.

That is, in the mobile terminal 100 according to an embodiment of the present invention, a function or an application which is being executed in the mobile terminal 100 can be controlled in response to a user touch (input) applied to the deactivated display unit 151. Also, although not currently executed in the mobile terminal 100 according to an embodiment of the present invention, a function which is executable or drivable in the mobile terminal 100 can be executed based on a touch applied to the deactivated display unit 151.

Therefore, in regard to a user, instead of the deactivated display unit 151 being activated and then a function desired by the user is performed, the function desired by the user can be performed even when the display unit 151 is deactivated, and thus, a function can be more quickly performed because an additional procedure is omitted. Also, in regard to the mobile terminal 100, the mobile terminal 100 may perform a specific function even without activating the display unit 151, thereby reducing power consumption.

Hereinafter, a mobile terminal which provides a novel user interface based on a touch applied to the deactivated display unit 151 and a method of controlling the same will be described in detail. In particular, a memo function among various functions which are provided when the display unit 151 is deactivated will be described in detail.

The memo function performed by the mobile terminal 100 according to an embodiment of the present invention may denote storing a trajectory of a touch as memo information in response to the touch applied to the display unit 151. The memo information may be stored in the form of an image. Here, the image may include a still image and a moving image. That is, the controller 180 can process a touch, applied to the display unit 151, as an input of memo information. The memo function may store, as memo information, an image corresponding to a trajectory of a touch applied to the display unit 151. Furthermore, the memo function may denote storing the memo information, corresponding to the trajectory of the touch, as a file having another format instead of the form of an image. Here, "storing an image" may denote "storing memo information in a memory", and "storing a file" may denote "storing a file in a memory."

Memo information to be described below may be used as a term referring to one file 500 which includes an image 400 corresponding to a trajectory of a touch and at least one image. For example, the memo information may be used as representation in which an image corresponding to a trajectory of a touch is processed as an input of memo information 400, or an image corresponding to a trajectory of a touch is stored as one piece of memo information 500 corresponding to a trajectory of a touch based on the release of the touch.

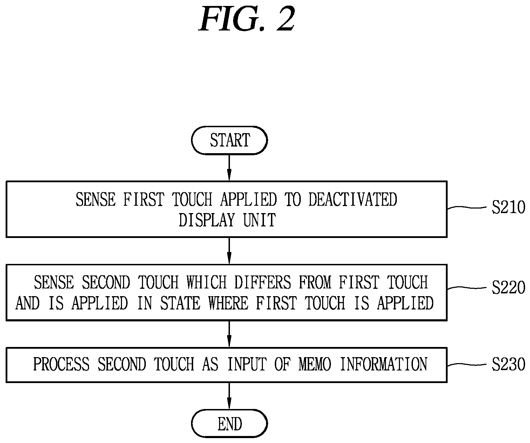

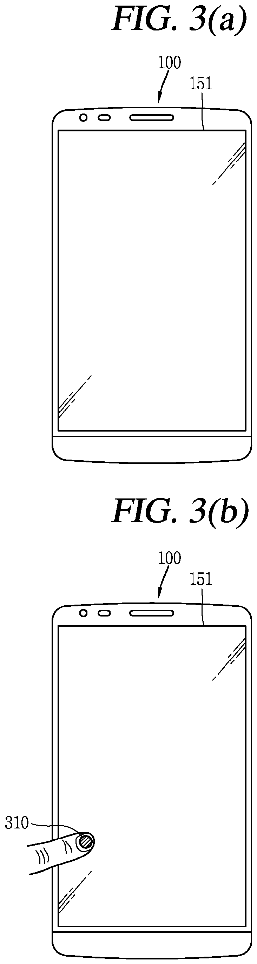

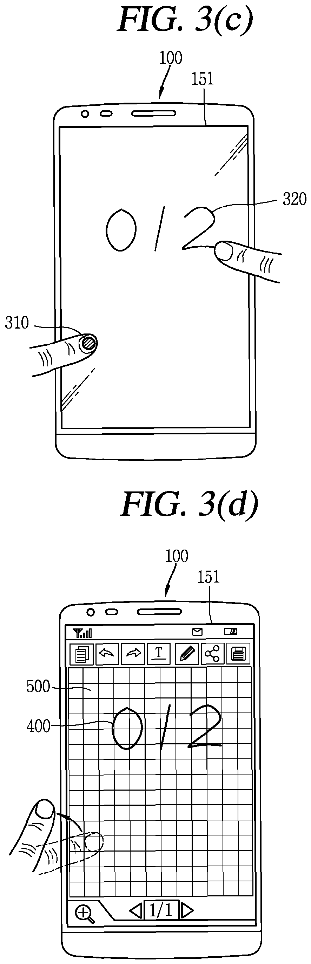

A method of providing a memo function when the display unit 151 is deactivated will be described in more detail with reference to the drawings. FIG. 2 is a flowchart representatively illustrating a control method according to an embodiment of the present invention, and FIG. 3 is a conceptual diagram illustrating the control method illustrated in FIG. 2.

Referring to FIGS. 2 and 3, the controller 180 senses a first touch 310 applied to the deactivated display unit 151 (S210). The first touch 310 can be a predetermined type of touch associated with a memo function which is performable when the display unit 151 is deactivated. Here, the touch associated with the memo function may denote a touch associated with execution of the memo function which performs control to execute the memo function when the display unit 151 is deactivated.

The first touch 310 may include one of a short (tap) touch, a long touch, a multi touch, a drag touch, a flick touch, a pinch-in touch, a pinch-output touch, a swipe touch, a hovering touch. When the first touch 310 is applied to the deactivated display unit 151, the controller 180 can execute a memo function, based on the first touch 310. At this time, even though the memo function is executed, the controller 180 can maintain the display unit 151 in an inactive state.

For example, the controller 180 can execute the memo function, based on the first touch 310 being maintained. In this instance, the first touch 310 may be the long touch. Also, the controller 180 can terminate the memo function, based on the first touch 310 being released. However, the present embodiment is not limited thereto. For example, the controller 180 can execute the memo function, based on the first touch 310 being applied as a touch (for example, the short touch) instead of the long touch, and terminate the memo function, based on a touch (for example, the short touch) instead of the long touch being again applied. Hereinafter, when the memo function is maintained while the first touch is being maintained will be described as an example.

Subsequently, when the first touch 310 is applied, the controller 180 senses a second touch 320 different from the first touch 310 (S220). The first touch 310 being applied may denote the first touch 310 being maintained on the deactivated display unit 151.

The memo function has been described above as being executed based on the first touch 310 applied to the deactivated display unit 151, but the present embodiment is not limited thereto. For example, the controller 180 can perform the memo function when the first touch 310 is applied to the display unit 151 and satisfies a predetermined condition. The predetermined condition may include when the first touch 310 is maintained for a reference time, when the first touch 310 is continuously applied at least two times or more, or when touches which are simultaneously applied from at least two points are applied.

As another example, the controller 180 can execute the memo function, based on the first touch 310 being applied and a second touch 320 which differs from the first touch 310 being applied. In more detail, after the first touch 310 is applied, and when the second touch 320 is applied, the controller 180 can execute the memo function, based on at least one of the first touch 310 and the second touch 320 satisfying a predetermined condition. The predetermined condition may include when the second touch 320 is applied while the first touch 310 is being maintained, or when the second touch 320 is applied after the first touch 310 satisfying the predetermined condition is applied. Through such a configuration, an embodiment of the present invention can prevent the memo function from being executed due to an undesired error touch applied to the display unit 151. Hereinabove, the memo function is executed while the display unit 151 is being maintained in an inactive state.

Hereinafter, when the memo function is executed based on the first touch 310 being applied will be described as an example. The controller 180 can sense the second touch 320 (which differs from the first touch 310) while the first touch 310 is applied. The second touch 320, which is applied when the first touch 310 is applied, may include various types of touches. For example, the second touch 320 may include one of a short (tap) touch, a long touch, a multi touch, a drag touch, a flick touch, a pinch-in touch, a pinch-output touch, a swipe touch, a hovering touch.

Moreover, the second touch 320 may include at least one touch. In more detail, one touch applied to the display unit 151 may be defined based on that a touch target (for example, a finger or a touch pen) touches the display unit 151 and then is detached from the display unit 151. That is, the one touch may denote a touch which is applied while the touch target touches the display unit 151 once and then is detached from the display unit 151.

The second touch 320 including at least one touch may denote when a time interval between a time when the one touch is applied and a time when the other one touch is applied is within a reference time interval, the one touch and the other one touch correspond to the second touch 320.

For example, as illustrated in FIG. 3(c), the second touch 320 may include a plurality of touches corresponding to '0', '1', and '2'. Here, a time interval between '0' and '1' and a time interval between '1' and '2' are within the reference time interval, the controller 180 can process, as the second touch 320, the plurality of touches corresponding to '0', '1', and '2'.

Subsequently, the controller 180 can perform a memo function 500 of processing, as an input of memo information 400, the first touch 310 and the second touch 320 (S230). Based on the first touch 310 being applied, the controller 180 can execute the memo function, and process, as an input of memo information, the second touch 320 applied while the first touch 310 is being maintained. Here, while the first touch 310 applied to the display unit 151 is being maintained, the controller 180 can maintain a memo function that processes the second touch 320, applied to the display unit 151, as an input of memo information 400.

The memo information 400 may be an image corresponding to a trajectory of the second touch 320. Subsequently, based on the first touch 310 applied to the deactivated display unit 151 being released, the controller 180 can store the input memo information 400, and terminate the memo function.

The above-described details will be clarified with reference to FIG. 3. First, when the display unit 151 is deactivated as illustrated in FIG. 3(a), and when the first touch 310 is applied as illustrated in FIG. 3(b), the controller 180 can execute the memo function. In this instance, as illustrated in FIG. 3(b), the display unit 151 can maintain an inactive state.

Subsequently, as illustrated in FIG. 3(c), when the second touch 320 differing from the first touch 310 is applied while the first touch 310 is being maintained, the controller 180 can sense the second touch 320. Here, when a plurality of touches (for example, '0', '1', and '2') which are applied while the first touch 310 is being maintained are continuously applied within the reference time interval, the controller 180 can process the plurality of touches as one second touch 320.

The controller 180 can process the second touch 320 as an input of memo information. The memo information 400 may be the image corresponding to a trajectory of the second touch 320. When the first touch 310 applied to the display unit 151 is released, the controller 180 can store the memo information 400 input by the second touch 320, and terminate the memo function 500.

For example, as illustrated in FIG. 3(d), when the first touch 310 is released from the display unit 151, the controller 180 can receive, as memo information 400, an image corresponding to the trajectory of the second touch 320 applied while the first touch 310 applied to the deactivated display unit 151 is being maintained. Also, the controller 180 can store the received memo information in one data format.

Also, the controller 180 can activate the deactivated display unit 151, based on the first touch 310 being released (an operation of activating the display unit 151 will be described below in detail). However, the present embodiment is not limited thereto, and the display unit 151 can be activated by separate manipulation for activating the display unit 151.

Here, the separate manipulation may include an operation of inputting a separate key (for example, a power button) for activating the display unit 151 and an operation of applying a predetermined type of touch (for example, a double touch in which at least two taps are continuously applied) for activating the display unit 151. As described above, in the deactivated display unit 151, the present invention can perform a memo function even without separately activating the display unit 151, and can considerably increase a user's convenience.

Hereinafter, a method of inputting memo information to the deactivated display unit 151 by using first and second touches will be described in more detail with reference to the accompanying drawings. First, a method in which the mobile terminal 100 differently processes memo information according to a first touch will be described in detail.

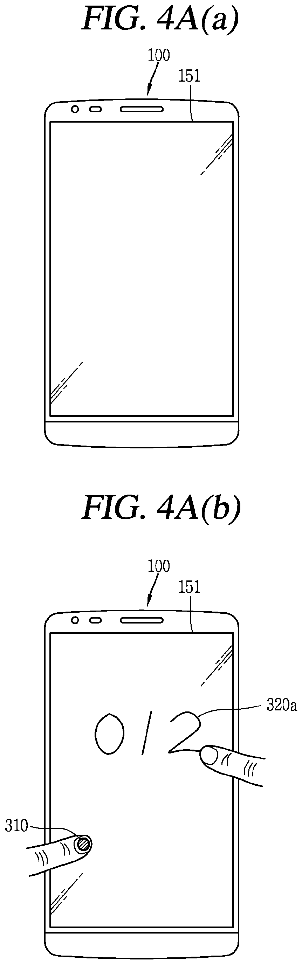

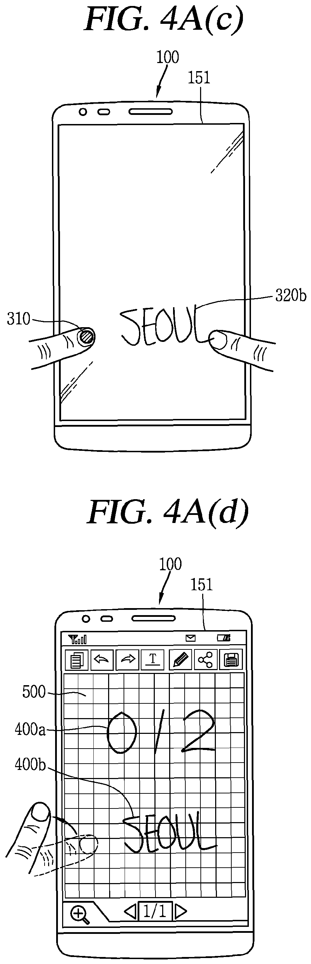

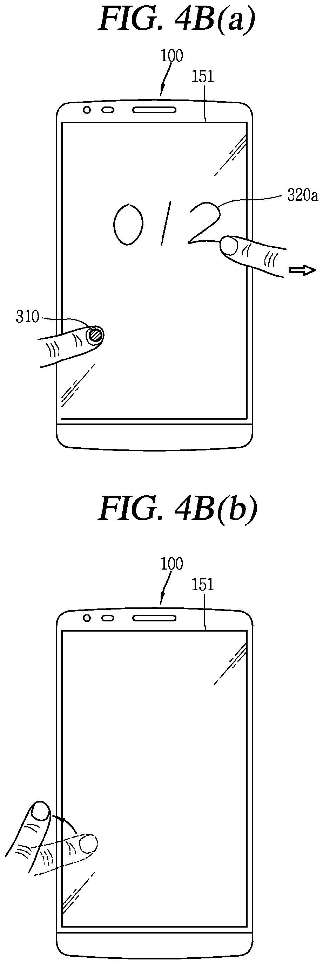

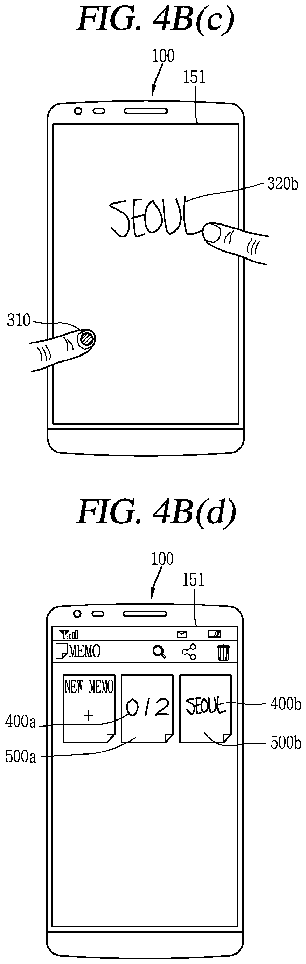

FIGS. 4A and 4B are conceptual diagrams illustrating a method of differently processing memo information according to a first touch. First, as illustrated in FIG. 4A(a) and (b), the controller 180 can sense a first touch 310 which is applied to the deactivated display unit 151. The controller 180 can execute a memo function, based on the first touch 310 being applied. When the first touch 310 is located in a region which enables a user input (touch) applied to the display unit 151 to be sensed, the controller 180 can execute the memo function.

The first touch 310 may be a proximity touch as well as a contact touch in which a touch is really applied to the display unit 151. Moreover, the memo function being executed may denote that the controller 180 enters a state for receiving, as memo information, another touch (for example, a second touch) which is applied when the display unit 151 is deactivated, instead of the first touch 310. In this instance, in an embodiment of the present invention, the display unit 151 maintains an inactive state even when the memo function 500 is executed (even when the first touch 310 is applied to the deactivated display unit 151).

As illustrated in FIG. 4A(b), when a second touch 320a different from the first touch 310 is applied to the deactivated display unit 151 while the first touch 310 is applied, the controller 180 can process the second touch 320a as an input of memo information. Also, as illustrated in FIG. 4A(c), when the first touch 310 is maintained, when the second touch 320a is applied and then a new second touch 320b is applied after a reference time elapses, the controller 180 can process the new second touch 320b as an input of memo information.

The memo information may be an image corresponding to a trajectory of the second touch. In more detail, the controller 180 can generate a first image 400a, based on the second touch 320a being applied while the first touch 310 is being maintained. Also, while the first touch 310 is being maintained, the controller 180 can generate a second image 400b, based on that the second touch 320a is applied and then the new second touch 320b is applied after the reference time elapses.

As illustrated in FIG. 4A(d), when the maintained first touch 310 is released, the controller 180 can process, as one piece of memo information including images 400a and 400b corresponding to trajectories of the second touches 320a and 320b input while the first touch 310 is being maintained. That is, the controller 180 can process at least one second touch 320, which is input when the first touch 310 is applied, as the one piece of memo information.

When the first touch 310 is applied to the deactivated display unit 151 as illustrated in FIG. 4B(a), the second touch 320a may be applied, and the first touch 310 may be released as illustrated in FIG. 4B(b). Subsequently, the new second touch 320b may be applied when the first touch 310 is applied to the deactivated display unit 151 as shown in FIG. 4B(c). In this instance, as illustrated in FIG. 4B(d), the controller 180 can store an image 400a, corresponding to a trajectory of the second touch 320a, as memo information 500a and store an image 400b, corresponding to a trajectory of the new second touch 320b, as memo information 500b.

Here, as illustrated in FIG. 4B(d), the controller 180 can activate the display unit 151, based on the first touch 310 being released. As another example, as illustrated in FIG. 4B(b), the controller 180 can maintain an inactive state of the display unit 151. That the display unit 151 is switched to an active state or maintains an inactive state based on the first touch 310 being released may be based on a user's setting, or may be changed according to control by the controller 180. For example, when a time when the first touch 310 is released and then is again applied is within a predetermined time, the controller 180 can maintain the inactive state of the display unit 151.

As described above, in one embodiment of the present invention, whether to input a second touch (which is input while a first touch is being maintained) as one piece of memo information may be determined according to whether the first touch is input. That is, the present invention can store, as one piece of memo information, at least one the second touch which is input while the first touch is being maintained. Therefore, even when the display unit is deactivated, a user can be provided with a new user interface for determining whether to store the first touch as one piece of memo information or different memo information.

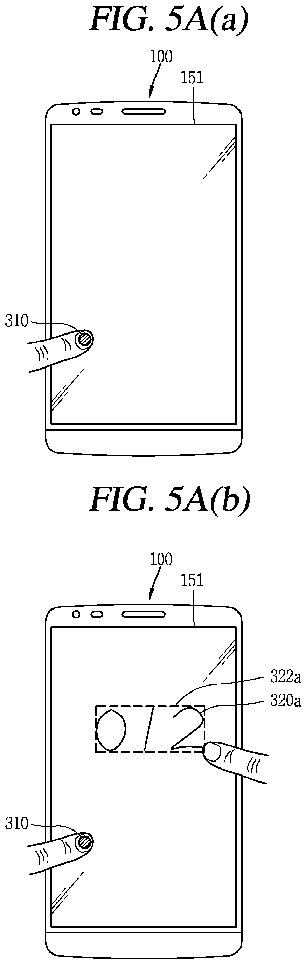

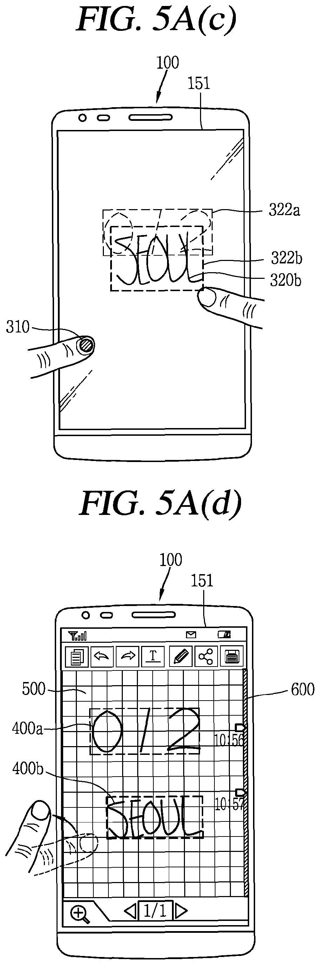

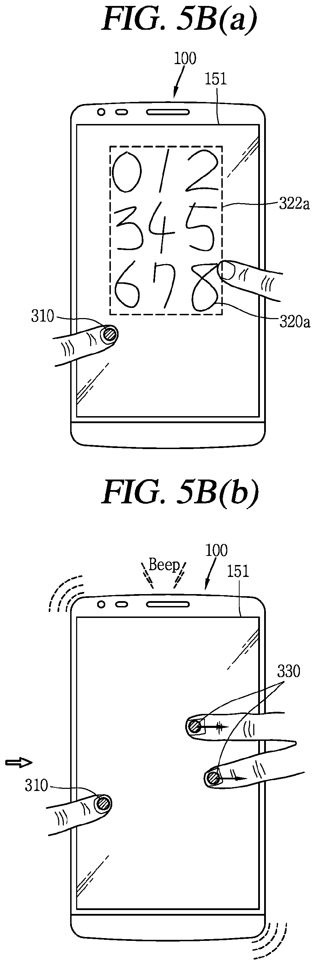

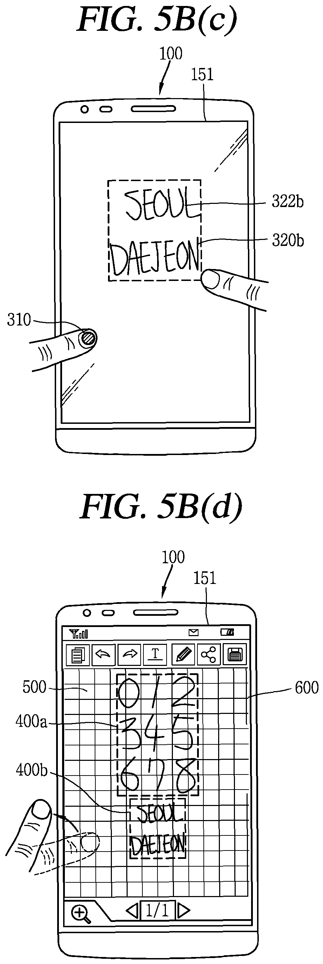

Hereinafter, various methods of storing at least one second touch, which is applied while a first touch is being maintained, as one piece of memo information will be described in more detail with reference to the accompanying drawings. In particular, FIGS. 5A and 5B are conceptual diagrams illustrating a method of processing, as one memo information, an image corresponding to a trajectory of a second touch applied while a first touch is being maintained when the display unit is deactivated.

The controller 180 can generate a first image 400a corresponding to a trajectory of a second touch 320a, based on the second touch 320a being applied while the first touch 310 is being maintained. Subsequently, while the first touch 310 is being continuously maintained, the controller 180 can generate a second image 400b, based on that the second touch 320a is applied and then a new second touch 320b is applied after a reference time elapses.

Here, when a region 322b to which the new second touch 320b is applied overlaps a region 322a to which the second touch 320a is applied, the controller 180 can output the first and second images 400a and 400b to different regions so that the first and second images 400a and 400b are not output in an overlapped state, in response to an output request for memo information.

Here, a region 322 to which the second touch is applied may be defined based on a trajectory of the second touch. In more detail, the region 322 to which the second touch is applied may be defined based on the trajectory of the second touch including at least one touch. For example, the region 322 to which the second touch is applied may have a rectangular shape corresponding to an abscissa-axis maximum value and an ordinate-axis maximum value of the trajectory of the second touch. In this instance, the region 322 to which the second touch is applied may include a region (an empty space) to which the second touch is not applied, as well as the trajectory of the second touch.

When the first touch 310 is applied to the deactivated display unit 151 as illustrated in FIG. 5A(a), the second touch 320a may be applied to the display unit 151 as illustrated in FIG. 5A(b), and the new second touch 320b may be applied to the display unit 151 after the reference time elapses as illustrated in FIG. 5A(c). As illustrated in FIG. 5A(c), the region 322a to which the second touch 320a is applied may overlap the region 322b to which the new second touch 320b is applied. In this instance, as illustrated in FIG. 5A(d), the controller 180 can output the first and second images 400a and 400b to different regions so that the first image 400a corresponding to the trajectory of the second touch 320a and the second image 400b corresponding to the trajectory of the new second touch 320b are not output in an overlapped state, based on an output request (for example, the release of the first touch 310) for the memo function 500.

For example, in order for the first and second images 400a and 400b to be displayed in different regions, the controller 180 can output the images, based on a time when the second touch 320a is applied and a time when the new second touch 320b is applied. In this instance, as illustrated in FIG. 5A(d), the controller 180 can output a graphic object 600 notifying a time when the second touch is applied.

When the second touch 320 is input to a region occupying a reference rate or more in a region of the display unit 151 when the first touch 310 is applied, the controller 180 can output notification information. The reference rate may be defined as a rate in which a region to which the second touch is applied occupies the region of the display unit 151. In an embodiment, the controller 180 can determine whether the region 322 to which the second touch is applied occupies the reference rate or more of the region of the display unit 151, by using an area of the region 322 to which the second touch is applied and a longitudinal length or a horizontal length corresponding to the region to which the second touch is applied.

As illustrated in FIG. 5B(a), the second touch 320a may be applied when the first touch 310 applied to the deactivated display unit 151 is maintained. At this time, when the region 322 to which the second touch 320a is applied is a region corresponding to the reference rate or more, as illustrated in FIG. 5B(b), the controller 180 can output notification information. The notification information may be a type such as the mobile terminal 100 being vibrated or a sound being output.

Subsequently, when the notification information is generated, as illustrated in FIG. 5A, the first image 400a corresponding to the trajectory of the second touch 320a and the second image 400b corresponding to the trajectory of the new second touch 320b may be input to the one piece of memo information by applying the new second touch 320b after the reference time elapses when the first touch 310 is maintained.

As illustrated in FIG. 5B(b), the controller 180 can sense a predetermined type of touch 330, differing from the second touch 320, which is applied while the first touch 310 is maintained. Further, the controller 180 can enter a state for sensing a new second touch, based on the predetermined type of touch 330 being applied.

The predetermined type of touch 330 may include various types of touches. For example, as illustrated in FIG. 5B(b), the predetermined type of touch 330 may be a two-finger flicking touch. When the predetermined type of touch 330 is applied when the first touch 310 is maintained, the controller 180 can generate the first image 400a corresponding to the trajectory of the second touch 320a which is input before the predetermined type of touch 330 is applied.

Also, as illustrated in FIG. 5B(c) and 5B(d), the controller 180 can generate the second image 400b corresponding to the trajectory of the new second touch 320b which is input after the predetermined type of touch 330 is applied. Subsequently, the controller 180 can output the first and second images 400a and 400b to different regions so that the first and second images 400a and 400b are not output in an overlapped state, in response to an output request for the memo function 500.

Through the above-described configuration, by using the predetermined type of touch 330 the present invention can remove difficulty in which the mobile terminal 100 waits for the reference time to elapse, in generating one piece of memo information by applying a plurality of second touches.

In outputting the one piece of memo information including the first and second images 400a and 400b, the controller 180 can adjust sizes of the first and second images 400a and 400b. In more detail, the controller 180 can generate an image having a size which corresponds to the trajectory of the second touch, and input (store) the image as memo information.

In this instance, when a plurality of images generated from a plurality of second touches exceed an output region of the display unit 151 as illustrated in FIG. 5B, the controller 180 can adjust the sizes of the first and second images 400a and 400b to output the memo information as illustrated in FIG. 5B(d) so that the plurality of images are displayed at a time without a separate scroll. In addition, the controller 180 can output a graphic object for restoring a size-adjusted image to a size corresponding to the trajectory of the second touch.

As described above, the present invention can store, as one piece of memo information, at least one second touch which is applied while a first touch is being maintained. Also, in response to at least one second touch which is applied to an overlapped region while a first touch is being maintained, the present invention can output images corresponding to a trajectory of the at least one second touch so as not to overlap each other. Also, by applying a predetermined type of touch which differs from a second touch, the present invention can switch to a state for receiving a new second touch in response to the predetermined type of touch being applied. Therefore, a user can be provided with a new user interface for inputting at least one second touch as one piece of memo information while a first touch is being maintained.

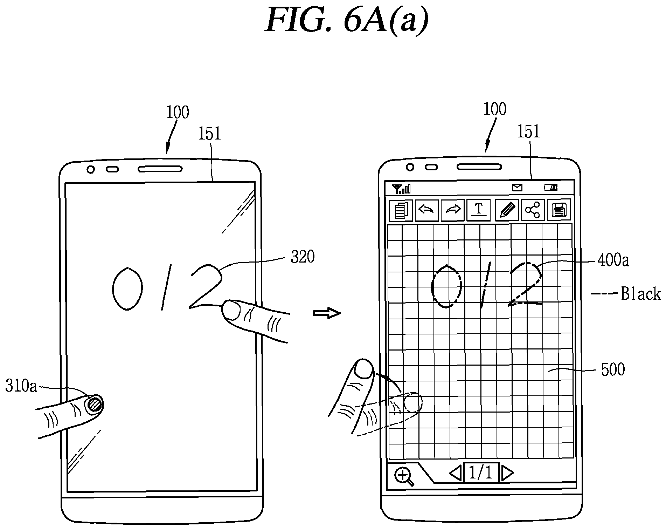

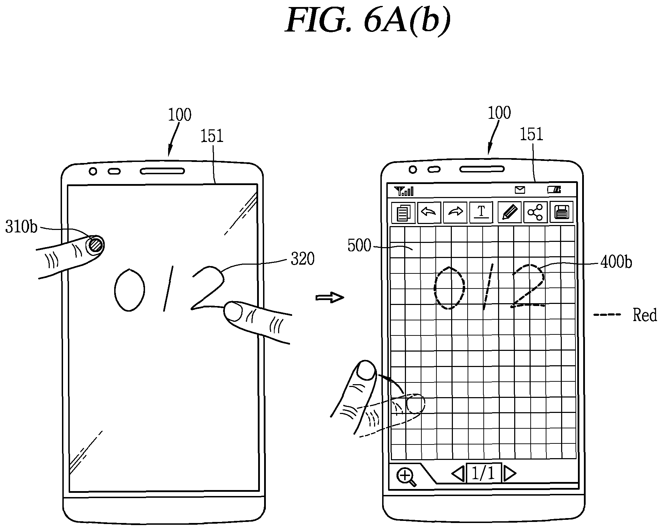

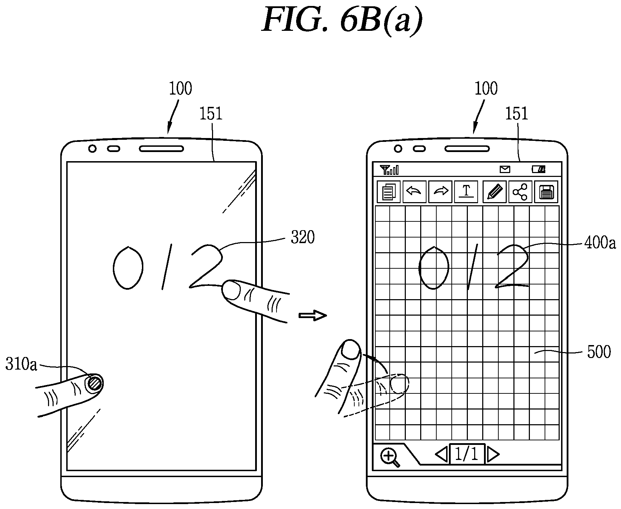

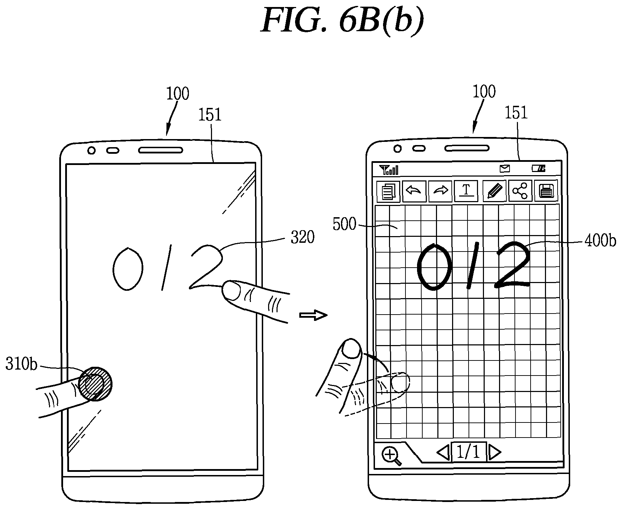

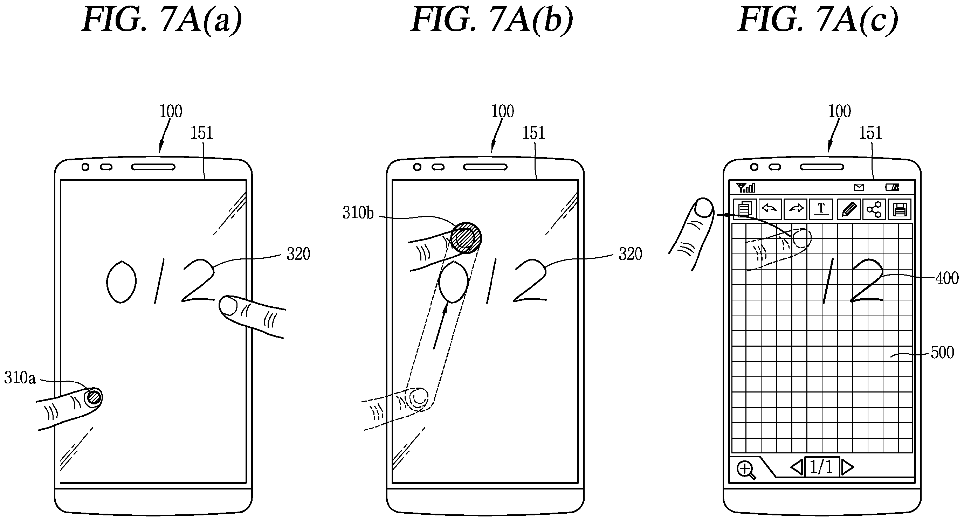

Hereinafter, a method of generating various types of memo information by applying a touch to a deactivated display unit will be described in more detail with reference to the accompanying drawings. FIGS. 6A and 6B are conceptual diagrams illustrating a method of differently processing an image generated by a second touch when a display unit is deactivated, based on a first touch. FIGS. 7A to 7C are conceptual diagrams illustrating a method of deleting an image generated by a second touch while a first touch is being maintained when a display unit is deactivated.

The controller 180 can differently generate the form of an image corresponding to a trajectory of a second touch depending on a position of a first touch 310 applied to the deactivated display unit 151. In more detail, the controller 180 can differently process a color of the image depending on a point (a position) to which the first touch 310 is applied, or may differently process an attribute of a line corresponding to a trajectory of the second touch. An image corresponding to the trajectory of the second touch may include a line corresponding to the trajectory.

For example, as illustrated in FIG. 6A(a), when a second touch 320 is applied to the deactivated display unit 151 while the first touch is applied to a first point 310a, the controller 180 can generate an image 400a having a first color (for example, black). Also, as illustrated in FIG. 6A(b), when the first touch is applied to a second point 310b, which differs from the first point 310a, on the deactivated display unit 151, the controller 180 can generate an image 400b having a second color (for example, red).

As described above, the image may include a line corresponding to a trajectory of the second touch. Also, the controller 180 can determine a thickness of the line in proportion to an area to which the first touch 310 applied to the deactivated display unit 151 is applied. For example, as illustrated in FIG. 6B(a), when the first touch applied to the deactivated display unit 151 corresponds to a first area 310a, a line 400a corresponding to a trajectory of the second touch 320 may have a first thickness. Also, as illustrated in FIG. 6B(b), when the first touch corresponds to a second area 310b which differs from the first area 310a, a line 400b corresponding to the trajectory of the second touch 320 may have a second thickness which differs from the first thickness.

By using at least one of the first touch and a predetermined type of touch, the controller 180 can delete an image, generated from the second touch which is applied while the first touch is being maintained, when the display unit 151 is deactivated.

First, a method of deleting an image generated from a second touch by using a first touch will be described in detail with reference to FIG. 7A. The controller 180 can delete an image generated from a second touch 320, based on a drag touch 310b which extend from a first touch 310a. That is, the generated image 400 may be deleted based on the drag touch 310b which extends from the first touch 310a.

For example, as illustrated in FIG. 7A(a), the controller 180 can generate an image (for example, '0', '1', and '2') corresponding to a trajectory of the second touch 320 when the first touch 310a is being maintained. At this time, the display unit 151 may maintain an inactive state. Subsequently, as illustrated in FIG. 7A(b), a trajectory of the drag touch 310b which extends from the first touch 310a may overlap at least one portion (for example, '0') of a trajectory 320 of the second touch. The drag touch 310b which extends from the first touch 310a may be a drag touch which is applied when a touch applied to the deactivated display unit 151 is being maintained.

In this instance, when the drag touch 310b which extends from the first touch 310a is released, the controller 180 can delete an image corresponding to the overlapped at least one portion (for example, '0') in the image corresponding to the trajectory 320 of the second touch. That is, in response to an output request for memo information, the controller 180 can store an image 400 (for example, an image in which '0' is deleted and which includes only '1' and '2'), in which the overlapped at least one portion is deleted, as memo information and activate the display unit 151 to output the image 400 in which the overlapped at least one portion is deleted.

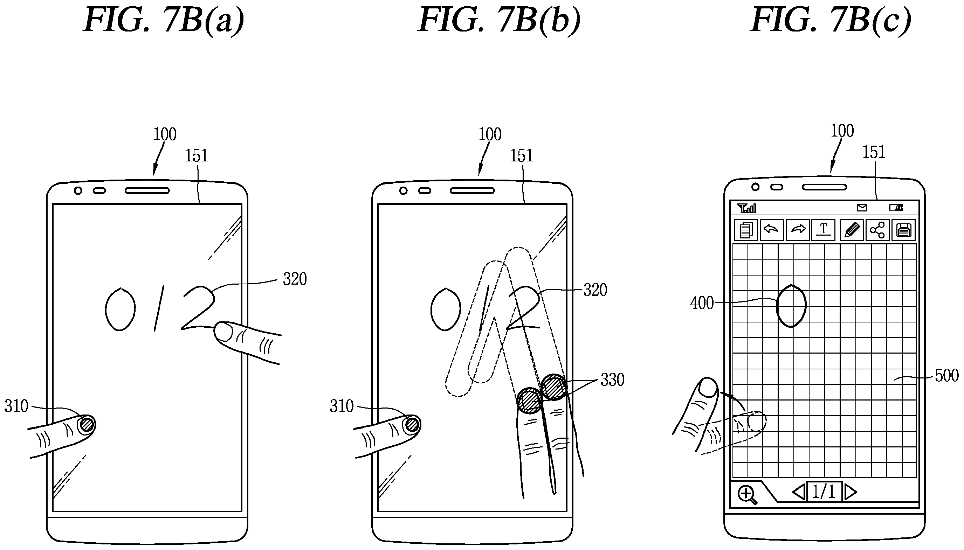

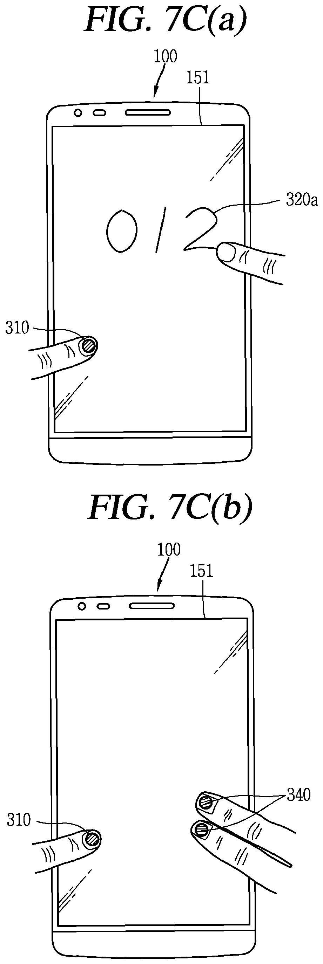

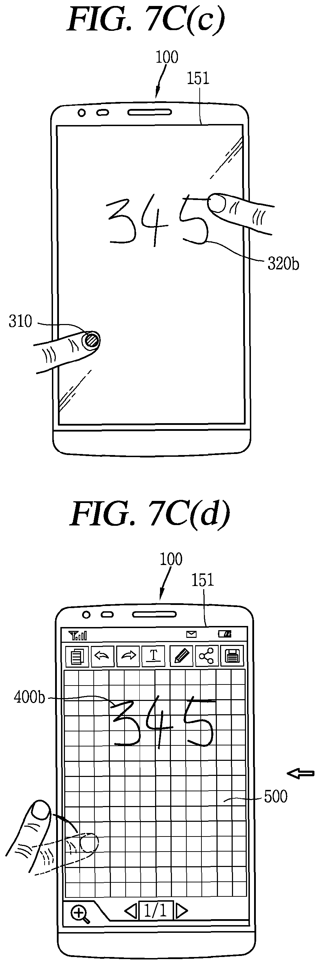

Next, a method of deleting an image generated from a second touch by using a predetermined type of touch differing from the second touch will be described in detail with reference to FIGS. 7B and 7C. First, as illustrated in FIG. 7B(a), when a first touch 310 applied to the deactivated display unit 151 is being maintained, the controller 180 can generate an image (for example, '0', '1', and '2') corresponding to a trajectory of a second touch 320, based on the second touch 320 being applied. Subsequently, the controller 180 can sense a predetermined type of touch 330 which differs from the second touch 320 and is applied. The predetermined type of touch 330 may include various touch types.

For example, as illustrated in FIG. 7B(b), the predetermined type of touch 330 may a two-finger drag touch which differs from the second touch 320. When a trajectory of the predetermined type of touch 330 overlaps at least one portion (for example, '1' and '2') of the image (for example, '0', '1', and '2') corresponding to the trajectory of the second touch 320, as illustrated in FIG. 7B(c), the controller 180 can delete an image (for example, '1' and '2') corresponding to the overlapped at least one portion. That is, in response to an output request for memo information, the controller 180 can store an image 400 (for example, an image in which '1' and '2' are deleted and which includes only '0'), in which the overlapped at least one portion is deleted, as memo information and activate the display unit 151 to output the image 400 in which the overlapped at least one portion is deleted.

As another example, as illustrated in FIG. 7C(a), when a first touch 310 applied to the deactivated display unit 151 is being maintained, the controller 180 can generate an image (for example, '0', '1', and '2') corresponding to a trajectory of a second touch 320a, based on the second touch 320a being applied. Subsequently, when the first touch 310 is being maintained, the controller 180 can sense a predetermined type of touch 340 which differs from the second touch 320a and is applied. Here, predetermined type of touch 340 may be associated with a function that deletes an image, generated from the second touch 320a, at a time. The predetermined type of touch 330 may include various types of touches. For example, the predetermined type of touch 330 may a two-finger drag touch.

That is, as illustrated in FIG. 7C(b), when the predetermined type of touch 340 is applied when the first touch 310 is being maintained, an image corresponding to a trajectory 320a of the second touch may be deleted before the touch 340 is applied. Subsequently, when the display unit 151 is deactivated, when a new second touch 320b is applied while the first touch 310 is being maintained, the controller 180 can generate an image 400b corresponding to a trajectory of the new second touch 320b, and in response to an output request for memo information, the controller 180 can output the image 400b, corresponding to the trajectory of the new second touch 320b, to the display unit 151.

As described above, embodiments of the present invention can input memo information in various types even when the display unit is deactivated, and delete input memo information. Therefore, the present invention can provide a user with a user interface which enables the user to use a memo function in various schemes even when the display unit is deactivated. Also, without activating the display unit for deleting memo information which is input in an inactive state, the user can delete the memo information while maintaining the inactive state. Therefore, a battery is saved in regard to a terminal, and in regard to a user, speed and convenience increase because an operation of activating the display unit is omitted.

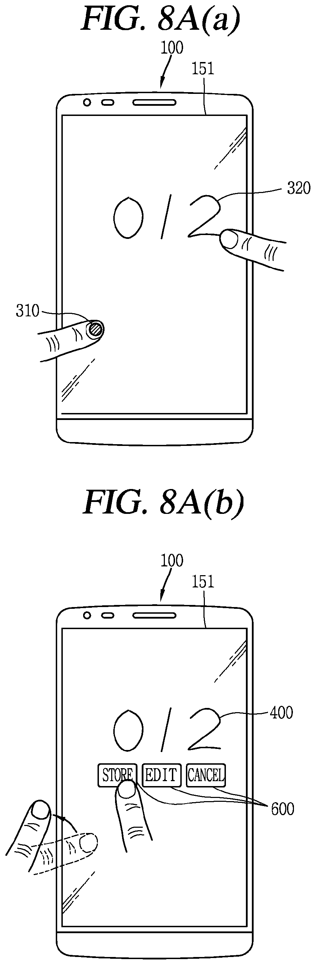

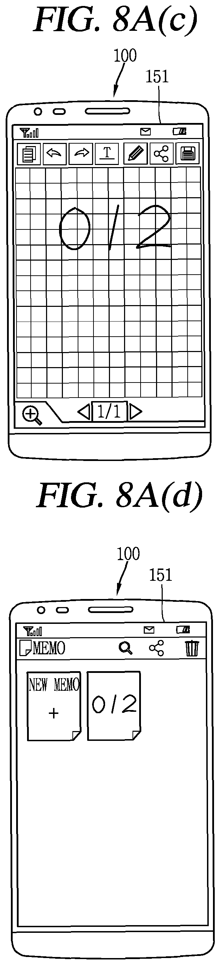

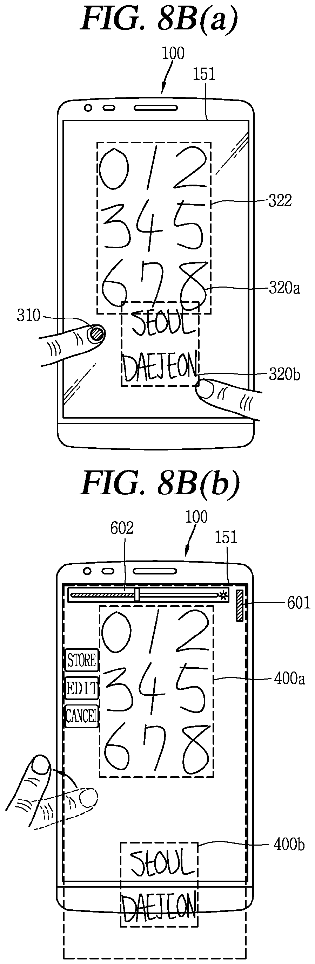

Hereinafter, a method of checking memo information input by a touch which is applied in an inactive state will be described in more detail with reference to the accompanying drawings. FIGS. 8A and 8B are conceptual diagrams illustrating a method of checking input memo information when a display unit is deactivated.

In response to a first touch being released, the controller 180 can store an image, corresponding to a trajectory of a second touch applied to the deactivated display unit 151, as memo information and terminate a memo function. Moreover, in response to the first touch being released, the controller 180 can activate the display unit 151, for outputting the image corresponding to the trajectory of the second touch.

For example, as illustrated in FIG. 8A(a), when a second touch 320 is applied when a first touch 310 is being maintained, the controller 180 can process the second touch 320 as an input of memo information. Subsequently, as illustrated in FIG. 8A(b), the controller 180 can output memo information input by the second touch 320, based on the first touch 310 being released. In order to output the memo information, the display unit 151 may be activated based on the first touch 310 being released. When the first touch 310 is released, as illustrated in FIG. 8A(b), the controller 180 can activate the display unit 151, and output, to the activated display unit 151, at least one of input memo information 400 (an image corresponding to a trajectory of the second touch 320) and a plurality of graphic objects 600 for selecting whether to store the memo information.

Subsequently, when a graphic object associated with an editing function is selected (touched) from among the output graphic objects 600, as illustrated in FIG. 8A(c), the controller 180 can execute a memo function, which enables the memo information 400 to be edited, when the display unit 151 is activated. Moreover, when a graphic object associated with a storage function is selected from among the output graphic objects 600, as illustrated in FIG. 8A(d), the controller 180 can store the memo information. Moreover, when a graphic object associated with a cancelation function is selected from among the output graphic objects 600, the controller 180 can delete the image 400 generated from a touch which is applied in an inactive state.

According to the method described above with reference to FIGS. 5A and 5B, as illustrated in FIG. 8B(a), at least two or more second touches 320a and 320b may be applied to the display unit 151 while the first touch 310 is being maintained. In this instance, in response to an output request (for example, the release of the first touch 310) for memo information, images 400a and 400b corresponding to at least two or more second touches may be displayed in different regions so that regions to which the plurality of touches are applied do not overlap each other.

As illustrated in FIG. 8B(b), since the images 400a and 400b are displayed in the different regions, the images 400a and 400b may deviate from an output region of the display unit 151. In this instance, based on the first touch 310 being released, the controller 180 can activate the display unit 151, and output a scrollbar 601 for checking memo information which deviates from the display unit 151. Also, the controller 180 can output a shadow adjusting bar 602 for adjusting a shadow (brightness) of the memo information. In the memo information 400a and 400b, a shadow may be adjusted by the shadow adjusting bar 602. Therefore, the present invention can reinforce a weak point of security which occurs in an operation of checking memo information which is input in an inactive state.

As described above, the present invention can release a first touch, and thus, a user can check memo information applied to the deactivated display unit. Therefore, memo information which is input in an inactive state may be checked by using only an operation of releasing a first touch which is maintained, thereby considerably increasing the user's convenience.

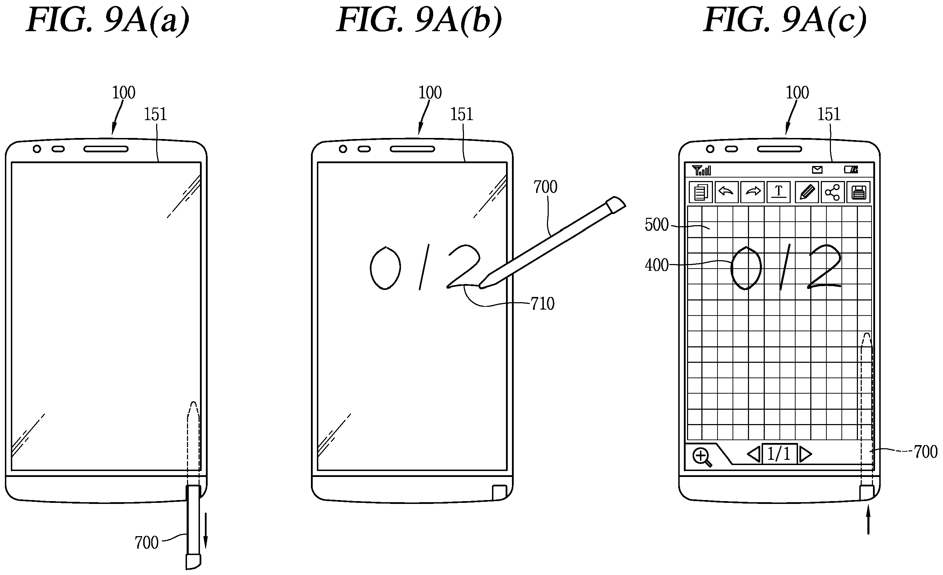

Hereinafter, a method of performing a memo function by using a touch pen when a display unit is deactivated will be described in more detail with reference to the accompanying drawings. FIGS. 9A to 9D are conceptual diagrams illustrating a method of performing a memo function by using a touch pen for a deactivated display unit.

The method of performing the memo function by using the touch pen may be inferred and applied identically or similarly to the method described above with reference to FIGS. 2 to 8B. That is, a state (described above with reference to FIG. 2) in which a first touch is inferred and applied as a state where the touch pen is detached from a body. That is, a first touch applied to the first display unit 151 being maintained may be inferred and applied as the state, where the touch pen is detached from the body, being maintained. Moreover, the first touch being released may be inferred and applied as the detached touch pen being equipped in the body.

Hereinafter, in comparison with using a first touch, the following description will focus on a differentiated example when the touch pen is used. The mobile terminal 100 according to an embodiment of the present invention may further include a touch pen 700. The touch pen 700 may be detachably attached to the body.

Moreover, the mobile terminal 100 according to an embodiment of the present invention may further include a sensing unit 140 that senses the touch pen 700 being detached from or equipped in the body. For example, the sensing unit 140 may sense the touch pen 700 being detached from the body. As another example, the sensing unit 140 may sense the touch pen 700 being equipped in the body.

Here, when the touch pen 700 is detached from the body, the controller 180 can execute a memo function of processing a touch, which is applied from the touch pen 700 to the deactivated display unit 151, as an input of memo information. Also, the controller 180 can maintain the memo function while a state where the touch pen 700 is detached from the body is being maintained.

Here, the memo information may be an image corresponding to a trajectory of a touch which is applied from the touch pen 700 while the touch pen 700 is detached from the body. When at least one touch is applied from the touch pen 700 while the touch pen 700 is detached from the body, the controller 180 can process images, corresponding to the at least one touch, as one piece of memo information.

Subsequently, based on the detached touch pen 700 being equipped in the body, the controller 180 can store memo information which is input to the deactivated display unit 151 by using the touch pen 700, and terminate the memo function. For example, as illustrated in FIG. 9A(a), the controller 180 can sense the touch pen 700 being detached from the body. In this instance, the controller 180 can execute the memo function.

As illustrated in FIG. 9A(b), the controller 180 can sense a touch 710 which is applied from the detached touch pen 700 to the deactivated display unit 151. The controller 180 can generate an image 400 corresponding to a trajectory of the touch 710, and store the image 400 as memo information, based on the detached touch pen 710 being equipped in the body. Also, based on the touch pen 700 being equipped in the body, the controller 180 can store the memo information, and terminate the memo function 500. Also, based on the detached touch pen 710 being equipped in the body, the controller 180 can switch the deactivated display unit 151 to an active state, and output the memo information 400 to the activated display unit 151 (the embodiment described above with reference to FIG. 9A may be inferred and applied identically or similarly to details described above with reference to FIG. 3).

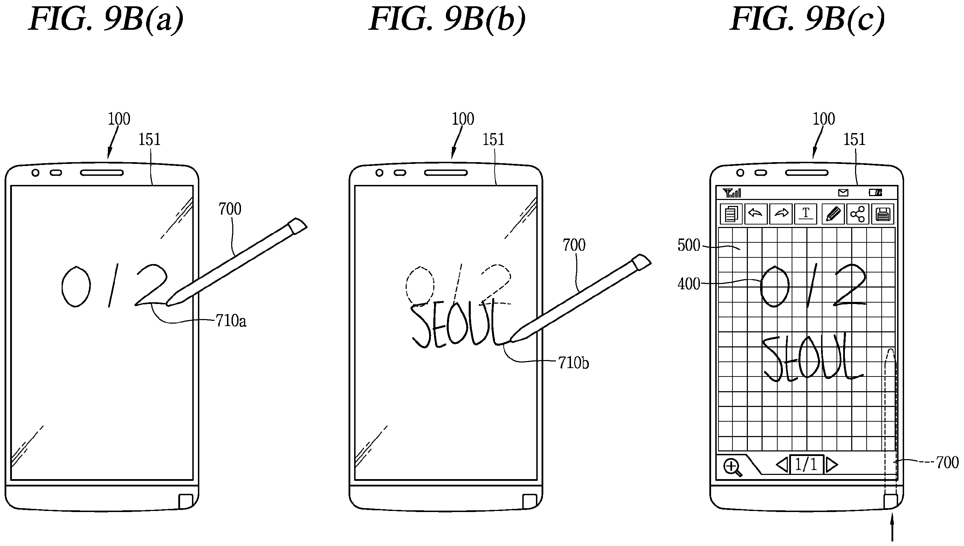

Moreover, when at least one touch is applied from the touch pen 700 while the touch pen 700 is detached from the body, the controller 180 can process images, corresponding to the at least one touch, as one piece of memo information. For example, as illustrated in FIG. 9B(a), when a touch 710a is applied from the detached touch pen 700 to the deactivated display unit 151, the controller 180 can generate a first image 400a corresponding to a trajectory of the touch 710a. Also, after a reference time elapses, when a new touch 710b is applied from the detached touch pen 700, the controller 180 can generate a second image 400b corresponding to a trajectory of the new touch 710b. Subsequently, the controller 180 can process the first and second images 400a and 400b as one piece of memo information, based on the detached touch pen 700 being equipped in the body.

Here, when a region to which the new touch 710b is applied overlaps a region to which the touch 710a is applied as illustrated in FIG. 9B(b), as illustrated in FIG. 9B(c), in response to an output request (for example, the detached touch pen 700 being equipped in the body) for memo information, the controller 180 can output the first and second images 400a and 400b to different regions so that the first and second images 400a and 400b are not output in an overlapped state (the embodiment described above with reference to FIG. 9B may be inferred and applied identically or similarly to details described above with reference to FIGS. 4A and 5A).

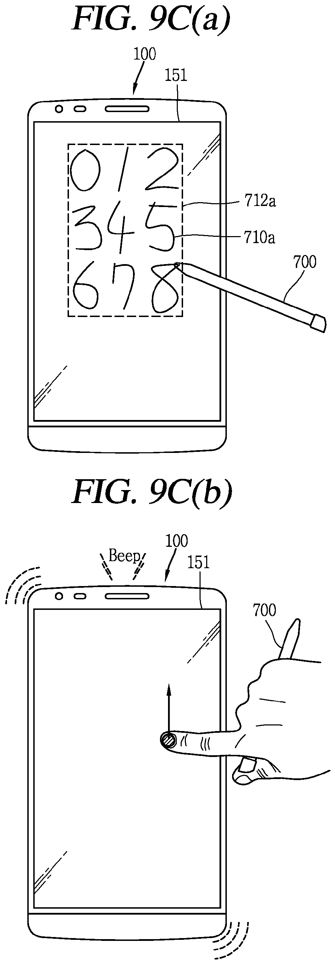

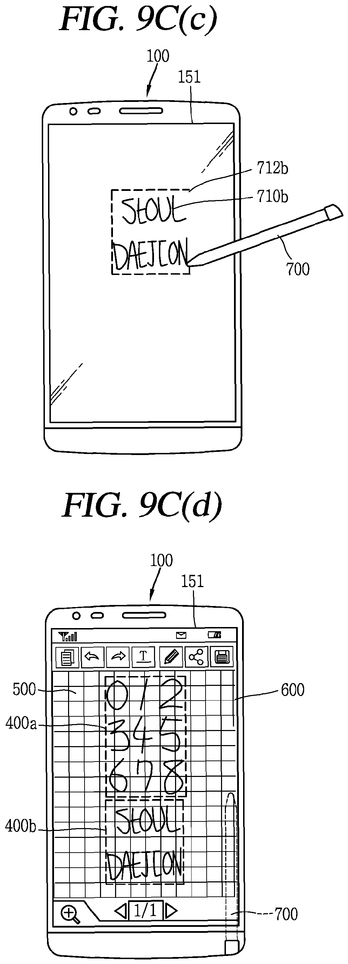

When the touch 710a which is applied to the detached touch pen 700 when the touch pen 700 is detached from the body is input to a region occupying a reference rate or more in a region of the display unit 151 as illustrated in FIG. 9C(a), the controller 180 can output notification information as illustrated in FIG. 9C (b).

Subsequently, as illustrated in FIG. 9C(b), the controller 180 can sense another touch 370 applied by a touch target (for example, a finger) instead of the touch pen 700 when the touch pen 700 is detached from the body. At this time, the controller 180 can enter a state for sensing a new touch applied by the touch pen 700, based on the other touch 370 being applied.

The other touch 370 may denote a touch which is applied to the deactivated display unit 151 by the touch target instead of the touch pen 700. The other touch 370 may include various types of touches. For example, as illustrated in FIG. 9C(b), the other touch 370 may be a flicking touch which is applied by a finger instead of the touch pen 700. When the other touch 370 is applied when the touch pen 700 is detached from the body, the controller 180 can generate a first image 400a corresponding to a trajectory of the touch 710a which is applied from the touch pen 700 before the other touch 370 is applied. Also, as illustrated in FIG. 9C c), the controller 180 can generate a second image 400b corresponding to a trajectory of a new second touch 710b which is applied from the detached touch pen 700 after the other touch 370 is applied.

Subsequently, in response to an output request for memo information 500, the controller 180 can output the first and second images 400a and 400b to different regions so that the first and second images 400a and 400b are not output in an overlapped state.

Through the above-described configuration, by using the other touch 300 which is applied by a touch target instead of a touch pen, the present invention can remove difficulty in which the mobile terminal 100 waits for until a reference time elapses, in generating one piece of memo information by applying a plurality of touches with a detached touch pen (the embodiment described above with reference to FIG. 9C may be inferred and applied identically or similarly to details described above with reference to FIG. 5B).

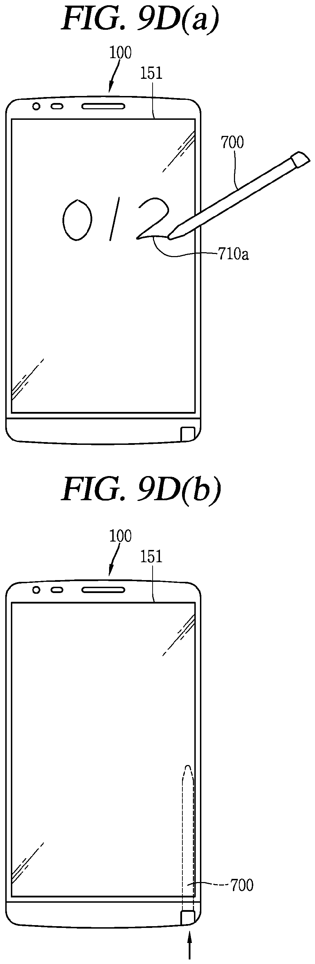

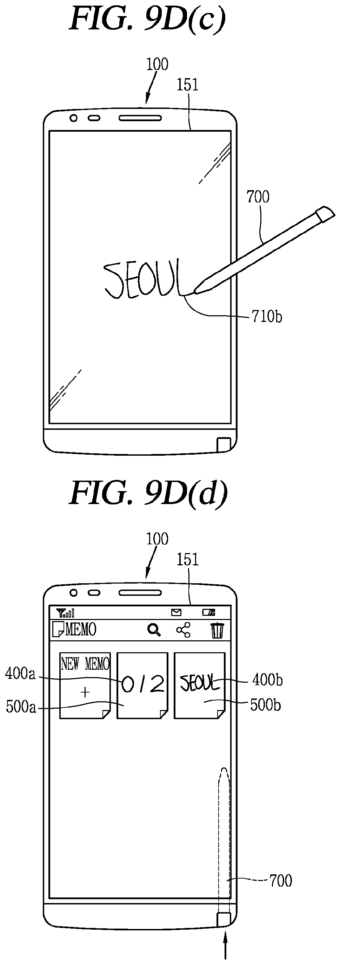

When the touch pen 700 is detached from the body as illustrated in FIG. 9D(a), a touch 710a may be applied to the deactivated display unit 151 by the detached touch pen 700, and as illustrated in FIG. 9D(b), the detached touch pen 700 may be equipped in the body. Subsequently, when the touch pen 700 is detached from the body, a new touch 710b may be applied from the detached touch pen 700 to the deactivated display unit 151. In this instance, as illustrated in FIG. 9D(d), the controller 180 can store, as different memo information 500a and 500b, an image 400a corresponding to a trajectory of the touch 710a which is applied in FIG. 9D(a) and an image 400a corresponding to a trajectory of the new touch 710b which is applied in FIG. 9D(c) (the embodiment described above with reference to FIG. 9D may be inferred and applied identically or similarly to details described above with reference to FIG. 4B). As described above, the present invention may perform a memo function by using a touch pen in a deactivated display unit, and thus can provide various user interfaces.

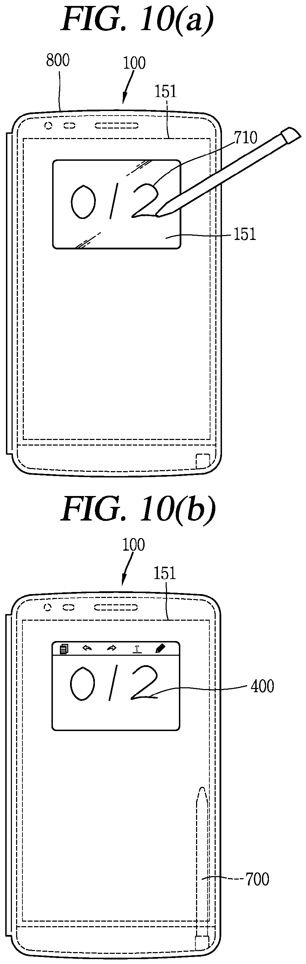

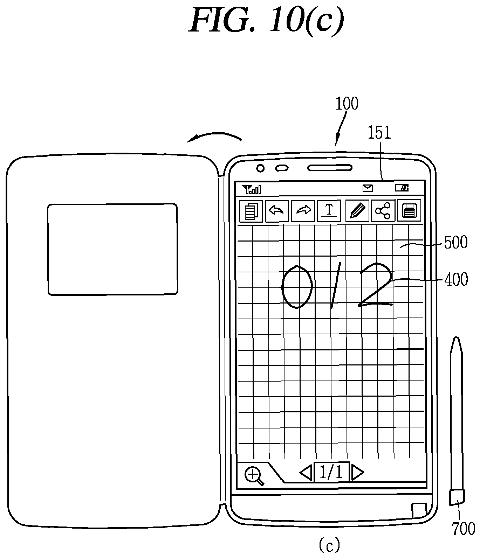

FIG. 10 is a conceptual diagram illustrating a method of performing a memo function by using a deactivated display unit in a state a cover is equipped in a mobile terminal. A cover 800 may be mounted to cover the mobile terminal 100. Also, the controller 180 can activate or deactivate the display unit 151 according to the cover 800 being opened or closed. Also, the controller 180 can output screen information through a window included in the cover 800 (hereinafter, a detailed description on the cover 800 is not provided).

Referring to FIG. 10(a), the display unit 151 may receive a user input 300 in a partial region, corresponding to a size of the window included in the cover 800, of a region of the display unit 151 by using the cover 800 equipped in the body. When the display unit 151 is deactivated, the controller 180 can sense the touch pen 700 being detached from the body, and sense a touch which is applied from the detached touch pen 700 to the partial region.

Subsequently, as illustrated in FIG. 10(b), when the cover 800 is covered, when the touch pen 700 is equipped in the body, the controller 180 can activate the partial region of the display unit 151 so that an image 400 corresponding to a trajectory of a touch applied from the detached touch pen 700 is displayed in the partial region.

As another example, as illustrated in FIG. 10(c), the controller 180 can output memo information which is input by the touch pen 700, based on the cover 800 being opened from the body in addition to the touch pen 700 being mounted. That is, when the cover 800 is opened from the body, the controller 180 can store input memo information 400, and terminate a memo function. Also, based on the cover 800 being opened from the body, the controller 180 can activate the deactivated display unit 151, and output the input memo information 400 to the activated display unit 151 (the embodiment described above with reference to FIG. 10 may be inferred and applied identically or similarly to details described above with reference to FIGS. 9A to 9D).

As described above, the present invention receives a touch even when the display unit is deactivated, and performs a specific function in response to the touch. Therefore, the present invention performs a specific function even without activating the display unit, thereby reducing power consumption. Moreover, the present invention performs a memo function by using a touch which is applied to the deactivated display unit. Therefore, the present invention does not perform a process of activating the display unit for using the memo function, and immediately performs the memo function by using the deactivated display unit, thereby satisfying the requirement of a user which immediately uses the memo function.

Moreover, based on a touch applied to the deactivated display unit, the present invention variously controls memo information input by the touch. Therefore, the present invention inputs memo information through the deactivated display unit, and variously controls the memo information, thereby providing a new user interface for a memo function in an inactive state.

Various embodiments may be implemented using a machine-readable medium having instructions stored thereon for execution by a processor to perform various methods presented herein. Examples of possible machine-readable mediums include HDD(Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

## Claims

1. A mobile terminal comprising:
a wireless communication unit (110) to provide wireless communication;
a touch screen (151); and
a controller (180) to:
deactivate the display screen (151),
receive a first touch on the deactivated display screen (151),
receive a second touch on the deactivated display screen (151) while the first touch is maintained on the deactivated display screen (151),
generate a first image based on the second touch,
execute a memo function on the mobile terminal in which the second touch corresponds to input memo information, and
maintain the execution of the memo function while the first touch is maintained on the deactivated display screen (151),
wherein the controller further comprises means to:
receive a new second touch on the deactivated display screen (151) after a reference time elapses while the first touch input is being continuously maintained,
generate a second image based on the new second touch,
in response to the first touch being released:
activate the deactivated display screen (151), and
when a region where the new second touch is applied overlaps with a region where the second touch is applied, output the first image and the second image to different regions so that the first image and the second image are not output in an overlapped wherein the memo information includes an image corresponding to a trajectory of the second touch.

2. The mobile terminal of claim 1 wherein the controller (180) further comprises means to differently process a color of the image corresponding to the trajectory of the second touch, based on a position of the first touch.

3. The mobile terminal of claim 2, wherein when the first touch is applied to a first point, the controller (180) generates the image to have a first color, and
wherein when the first touch is applied to a second point different from the first point, the controller (180) generates the image to have a second color different from the first color.

4. The mobile terminal of claim 3 wherein the image comprises a line corresponding to the trajectory of the second touch, and
wherein the controller (180) applies a thickness of the line in proportion to an area of the first touch.

5. The mobile terminal of claim 4 wherein the controller (180) further comprises means to:
delete the generated image based on a drag touch extending from the first touch.

6. The mobile terminal of claim 5, wherein when a trajectory of the drag touch extending from the first touch overlaps at least one portion of the trajectory of the second touch after the image corresponding to the trajectory of the second touch is generated, the controller (180) deletes a portion of the overlapped at least one portion.

7. The mobile terminal of claim 6, wherein in response to the first touch being released, the controller (180) stores the input memo information and terminate the memo function.

8. The mobile terminal of claim 7, wherein when the first touch is released, the controller (180) activates the display screen (151) and outputs to the activated display screen (151) at least one of the input memo information and a graphic object for selecting whether to store the memo information.

9. A method of controlling a mobile terminal, the method comprising:
deactivating, via a controller (180), a display screen (151) of the mobile terminal;
receiving a first touch on the deactivated display screen (151);
receiving a second touch on the deactivated display screen (151) while the first touch is maintained on the deactivated display screen (151);
generating, via the controller (180), a first image based on the second touch,
executing, via the controller (180), a memo function on the mobile terminal in which the second touch corresponds to input memo information;
maintaining, via the controller (180), the execution of the memo function while the first touch is maintained on the deactivated display screen (151),
receiving a new second touch on the deactivated display screen (151) after a reference time elapses while the first touch input is being continuously maintained,
generating, via the controller (180), a second image based on the new second touch,
in response to the first touch being released:
activating the deactivated display screen (151), and
when a region where the new second touch is applied overlaps with a region where the second touch is applied, outputting, on the display screen(151), the first image and the second image to different regions so that the first image and the second image are not output in an overlapped state, wherein the memo information includes an image corresponding to a trajectory of the second touch.

## Patentansprüche

1. Mobiles Endgerät, welches Folgendes aufweist:
eine Drahtloskommunikationseinheit (110) zum Bereitstellen einer drahtlosen Kommunikation,
einen Berührungsbildschirm (151) und
eine Steuereinrichtung (180), um Folgendes auszuführen:
Deaktivieren des Anzeigebildschirms (151),
Empfangen einer ersten Berührung auf dem deaktivierten Anzeigebildschirm (151),
Empfangen einer zweiten Berührung auf dem deaktivierten Anzeigebildschirm (151), während die erste Berührung auf dem deaktivierten Anzeigebildschirm (151) beibehalten wird,
Erzeugen eines ersten Bilds auf der Grundlage der zweiten Berührung,
Ausführen einer Mitteilungsfunktion auf dem mobilen Endgerät, wobei die zweite Berührung der eingegebenen Mitteilungsinformation entspricht, und
Beibehalten der Ausführung der Mitteilungsfunktion, während die erste Berührung auf dem deaktivierten Anzeigebildschirm (151) beibehalten wird,
wobei die Steuereinrichtung ferner Mittel aufweist, um Folgendes auszuführen:
Empfangen einer neuen zweiten Berührung auf dem deaktivierten Anzeigebildschirm (151), nachdem eine Referenzzeit verstrichen ist, während die erste Berührungseingabe kontinuierlich beibehalten wird,
Erzeugen eines zweiten Bilds auf der Grundlage der neuen zweiten Berührung und,
ansprechend darauf, dass die erste Berührung aufgehoben wird:
Aktivieren des deaktivierten Anzeigebildschirms (151) und,
wenn ein Gebiet, in dem die neue zweite Berührung angewendet wird, ein Gebiet überlappt, in dem die zweite Berührung angewendet wird, Ausgeben des ersten Bilds und des zweiten Bilds an verschiedene Gebiete, so dass das erste Bild und das zweite Bild nicht in einem überlappten Zustand ausgegeben werden,
wobei die Mitteilungsinformation ein Bild aufweist, das einer Bewegungsbahn der zweiten Berührung entspricht.

2. Mobiles Endgerät nach Anspruch 1, wobei die Steuereinrichtung (180) ferner Mittel aufweist, um eine Farbe des Bilds, das der Bewegungsbahn der zweiten Berührung entspricht, auf der Grundlage der Position der ersten Berührung verschiedenartig zu verarbeiten.

3. Mobiles Endgerät nach Anspruch 2, wobei, wenn die erste Berührung auf einen ersten Punkt angewendet wird, die Steuereinrichtung (180) das Bild so erzeugt, dass es eine erste Farbe aufweist, und
wenn die erste Berührung auf einen vom ersten Punkt verschiedenen zweiten Punkt angewendet wird, die Steuereinrichtung (180) das Bild so erzeugt, dass es eine von der ersten Farbe verschiedene zweite Farbe aufweist.

4. Mobiles Endgerät nach Anspruch 3, wobei das Bild eine der Bewegungsbahn der zweiten Berührung entsprechende Linie aufweist und
die Steuereinrichtung (180) die Dicke der Linie proportional zur Fläche der ersten Berührung anwendet.

5. Mobiles Endgerät nach Anspruch 4, wobei die Steuereinrichtung (180) ferner Mittel aufweist, um Folgendes auszuführen:
Löschen des erzeugten Bilds auf der Grundlage einer von der ersten Berührung ausgehenden Ziehberührung.

6. Mobiles Endgerät nach Anspruch 5, wobei, wenn eine Bewegungsbahn der Ziehberührung, die von der ersten Berührung ausgeht, zumindest einen Teil der Bewegungsbahn der zweiten Berührung überlappt, nachdem das der Bewegungsbahn der zweiten Berührung entsprechende Bild erzeugt wurde, die Steuereinrichtung (180) einen Teil des überlappten wenigstens einen Teils löscht.

7. Mobiles Endgerät nach Anspruch 6, wobei die Steuereinrichtung (180) ansprechend darauf, dass die erste Berührung aufgehoben wird, die eingegebene Mitteilungsinformation speichert und die Mitteilungsfunktion beendet.

8. Mobiles Endgerät nach Anspruch 7, wobei die Steuereinrichtung (180), wenn die erste Berührung aufgehoben wird, den Anzeigebildschirm (151) aktiviert und an den aktivierten Anzeigebildschirm (151) die eingegebene Mitteilungsinformation und/oder ein Graphikobjekt zur Auswahl, ob die Mitteilungsinformation zu speichern ist, ausgibt.

9. Verfahren zum Steuern eines mobilen Endgeräts, wobei das Verfahren Folgendes aufweist:
Deaktivieren eines Anzeigebildschirms (151) des mobilen Endgeräts durch eine Steuereinrichtung (180),
Empfangen einer ersten Berührung auf dem deaktivierten Anzeigebildschirm (151),
Empfangen einer zweiten Berührung auf dem deaktivierten Anzeigebildschirm (151), während die erste Berührung auf dem deaktivierten Anzeigebildschirm (151) beibehalten wird,
Erzeugen eines ersten Bilds auf der Grundlage der zweiten Berührung durch die Steuereinrichtung (180),
Ausführen einer Mitteilungsfunktion auf dem mobilen Endgerät durch die Steuereinrichtung (180), wobei die zweite Berührung der eingegebenen Mitteilungsinformation entspricht,
Beibehalten der Ausführung der Mitteilungsfunktion durch die Steuereinrichtung (180), während die erste Berührung auf dem deaktivierten Anzeigebildschirm (151) beibehalten wird,
Empfangen einer neuen zweiten Berührung auf dem deaktivierten Anzeigebildschirm (151), nachdem eine Referenzzeit verstrichen ist, während die erste Berührungseingabe kontinuierlich beibehalten wird,
Erzeugen eines zweiten Bilds auf der Grundlage der neuen zweiten Berührung durch die Steuereinrichtung (180),
ansprechend darauf, dass die erste Berührung aufgehoben wurde:
Aktivieren des deaktivierten Anzeigebildschirms (151) und,
wenn ein Gebiet, in dem die neue zweite Berührung angewendet wird, ein Gebiet überlappt, in dem die zweite Berührung angewendet wird, Ausgeben des ersten Bilds und des zweiten Bilds in verschiedenen Gebieten des Anzeigebildschirms (151), so dass das erste Bild und das zweite Bild nicht in einem überlappten Zustand ausgegeben werden,
wobei die Mitteilungsinformation ein Bild aufweist, das einer Bewegungsbahn der zweiten Berührung entspricht.

## Revendications

1. Terminal mobile comprenant :
une unité de communication sans fil (110) pour fournir une communication sans fil ;
un écran tactile (151) ; et
un dispositif de commande (180) pour :
désactiver l'écran d'affichage (151),
recevoir un premier toucher sur l'écran d'affichage désactivé (151),
recevoir un deuxième toucher sur l'écran d'affichage désactivé (151) alors que le premier toucher est maintenu sur l'écran d'affichage désactivé (151),
générer une première image sur la base du deuxième toucher,
exécuter une fonction de mémo sur le terminal mobile dans lequel le deuxième toucher correspond à des informations de mémo d'entrée, et
maintenir l'exécution de la fonction de mémo alors que le premier toucher est maintenu sur l'écran d'affichage désactivé (151),
dans lequel le dispositif de commande comprend en outre des moyens pour :
recevoir un nouveau deuxième toucher sur l'écran d'affichage désactivé (151) après qu'un temps de référence expire alors que l'entrée de premier toucher est maintenue de manière continue,
générer une deuxième image sur la base du nouveau deuxième toucher,
en réponse au relâchement du premier toucher :
activer l'écran d'affichage désactivé (151), et
quand une région où le nouveau deuxième toucher est appliqué chevauche une région où le deuxième toucher est appliqué, délivrer en sortie la première image et la deuxième image dans des régions différentes de manière que la première image et la deuxième image ne soient pas délivrées en sortie dans un état superposé,
dans lequel les informations de mémo comprennent une image correspondant à une trajectoire du deuxième toucher.

2. Terminal mobile selon la revendication 1, dans lequel le dispositif de commande (180) comprend en outre des moyens pour traiter différemment une couleur de l'image correspondant à la trajectoire du deuxième toucher, sur la base d'une position du premier toucher.

3. Terminal mobile selon la revendication 2, dans lequel, quand le premier toucher est appliqué en un premier point, le dispositif de commande (180) génère l'image pour avoir une première couleur, et
dans lequel, quand le premier toucher est appliqué en un deuxième point différent du premier point, le dispositif de commande (180) génère l'image pour avoir une deuxième couleur différente de la première couleur.

4. Terminal mobile selon la revendication 3, dans lequel l'image comprend une ligne correspondant à la trajectoire du deuxième toucher, et
dans lequel le dispositif de commande (180) applique une épaisseur de la ligne proportionnellement à une superficie du premier toucher.

5. Terminal mobile selon la revendication 4, dans lequel le dispositif de commande (180) comprend en outre des moyens pour :
supprimer l'image générée sur la base d'un toucher glissé s'étendant à partir du premier toucher.

6. Terminal mobile selon la revendication 5, dans lequel, quand une trajectoire du toucher glissé s'étendant à partir du premier toucher chevauche au moins une portion de la trajectoire du deuxième toucher après que l'image correspondant à la trajectoire du deuxième toucher est générée, le dispositif de commande (180) supprime une portion de l'au moins une portion de chevauchement.

7. Terminal mobile selon la revendication 6, dans lequel, en réponse au relâchement du premier toucher, le dispositif de commande (180) stocke les informations de mémo d'entrée et termine la fonction de mémo.

8. Terminal mobile selon la revendication 7, dans lequel, quand le premier toucher est relâché, le dispositif de commande (180) active l'écran d'affichage (151) et délivre en sortie à l'écran d'affichage activé (151) au moins une parmi les informations de mémo d'entrée et un objet graphique pour sélectionner si stocker ou non les informations de mémo.

9. Procédé de commande d'un terminal mobile, le procédé comprenant :
la désactivation, par le biais d'un dispositif de commande (180), d'un écran d'affichage (151) du terminal mobile ;
la réception d'un premier toucher sur l'écran d'affichage désactivé (151) ;
la réception d'un deuxième toucher sur l'écran d'affichage désactivé (151) alors que le premier toucher est maintenu sur l'écran d'affichage désactivé (151) ;
la génération, par le biais du dispositif de commande (180), d'une première image sur la base du deuxième toucher,
l'exécution, par le biais du dispositif de commande (180), d'une fonction de mémo sur le terminal mobile dans lequel le deuxième toucher correspond à des informations de mémo d'entrée ;
le maintien, par le biais du dispositif de commande (180), de l'exécution de la fonction de mémo alors que le premier toucher est maintenu sur l'écran d'affichage désactivé (151),
la réception d'un nouveau deuxième toucher sur l'écran d'affichage désactivé (151) après qu'un temps de référence expire alors que l'entrée de premier toucher est maintenue de manière continue,
la génération, par le biais du dispositif de commande (180), d'une deuxième image sur la base du nouveau deuxième toucher,
en réponse au relâchement du premier toucher :
l'activation de l'écran d'affichage désactivé (151), et
quand une région où le nouveau deuxième toucher est appliqué chevauche une région où le deuxième toucher est appliqué, la fourniture en sortie sur l'écran d'affichage (151) de la première image et la deuxième image dans des régions différentes de manière que la première image et la deuxième image ne soient pas délivrées en sortie dans un état superposé,
dans lequel les informations de mémo comprennent une image correspondant à une trajectoire du deuxième toucher.
